# EUROPÄISCHE PATENTSCHRIFT

(11) **EP 4 321 413 B1**
(45) Veröffentlichungstag und Bekanntmachung des Hinweises auf die Patenterteilung: **28.05.2025**
(21) Anmeldenummer: 23179416.5
(22) Anmeldetag: 15.06.2023
(51) Int. Cl.: B62D 5/30

(54) **HYDRAULISCHES LENKSYSTEM FÜR EINE LANDWIRTSCHAFTLICHE ARBEITSMASCHINE**
HYDRAULIC STEERING SYSTEM FOR AN AGRICULTURAL WORKING MACHINE
SYSTÈME DE DIRECTION HYDRAULIQUE POUR UNE MACHINE DE TRAVAIL AGRICOLE

(30) Priorität: 11.08.2022 DE 102022120356
(43) Veröffentlichungstag der Anmeldung: 14.02.2024
(73) Patentinhaber: CLAAS Tractor S.A.S., 78141 Vélizy-Villacoublay Cedex (FR)
(72) Erfinder: Baum, Robert, 33098 Paderborn (DE); Blömer, Marcel, 08485 Lengenfeld (DE); Schneider, Davis, 33014 Bad Driburg (DE)
(74) Vertreter: CLAAS Gruppe

(56) Entgegenhaltungen:
- DE-A1- 102008 015 729

## Beschreibung

Die vorliegende Erfindung betrifft ein hydraulisches Lenksystem für eine landwirtschaftliche Arbeitsmaschine gemäß dem Oberbegriff des Anspruches 1. Weiterhin betrifft die Erfindung ein Verfahren zum Betreiben eines hydraulischen Lenksystems sowie eine landwirtschaftliche Arbeitsmaschine, insbesondere Traktor, mit einem hydraulischen Lenksystem.

Ein hydraulisches Lenksystem für eine als Radlader ausgeführte Arbeitsmaschine ist aus der DE 10 2008 015 729 A1 bekannt. Eine Hydropumpe in einem Hydraulikkreis ist zur Versorgung eines hydraulischen Lenkaggregates des hydraulischen Lenksystems im Normalbetrieb vorgesehen. Zudem ist eine durch ein Getriebe starr mit einem Fahrantrieb gekoppelte Notlenkpumpe vorgesehen, welche sowohl im Normalbetrieb und im Notbetrieb, d.h. beim Ausfall der Hydropumpe, das hydraulische Lenksystem fahrgeschwindigkeitsabhängig mit Hydrauliköl versorgt, um die Lenkfähigkeit im Notbetrieb aufrechtzuerhalten. Die mit dem Fahrantrieb gekoppelte Notlenkpumpe saugt stets, also sowohl im Normalbetrieb als auch im Notbetrieb, Hydrauliköl aus einem gemeinsamen Tank an und fördert dies in den Kreislauf des hydraulischen Lenksystems oder einem Speicherelement zu. Zur Umschaltung der Zuführung des von der Notlenkpumpe geförderten Hydrauliköls zwischen dem hydraulischen Lenksystem und dem Speicherelement ist der Notlenkpumpe ein Prioritätsventil nachgeschaltet. Das stete Fördern des Hydrauliköls in den Kreislauf des hydraulischen Lenksystems durch die Notlenkpumpe hat der Nachteil, dass immer ein fahrgeschwindigkeitsabhängiger Verlust in dem hydraulischen Lenksystem auftritt.

Ausgehend vom vorstehend genannten Stand der Technik liegt der Erfindung die Aufgabe zugrunde, ein hydraulisches Lenksystem der eingangs genannten Art weiterzubilden, welches sich durch eine verbesserte Effizienz auszeichnet.

Diese Aufgabe wird durch ein hydraulisches Lenksystem mit den Merkmalen des unabhängigen Anspruches 1 gelöst. Vorteilhafte Ausführungsformen und Weiterbildungen sind den hiervon abhängigen Ansprüchen zu entnehmen. Weiterhin wird die Aufgabe durch ein Verfahren zum Betreiben eines hydraulischen Lenksystems mit den Merkmalen des nebengeordneten Anspruches 11 sowie eine landwirtschaftliche Arbeitsmaschine nach Anspruch 13 gelöst.

Gemäß Anspruch 1 wird ein hydraulisches Lenksystem für eine landwirtschaftliche Arbeitsmaschine, mit einem Lenkaggregat, das mit einem Hydraulikkreis verbunden ist, einer im Normalbetrieb der Versorgung des Hydraulikkreises des Lenksystems dienenden Hauptlenkpumpe sowie einer im Normalbetrieb und im Notbetrieb der Versorgung des Hydraulikreises dienenden Notlenkpumpe vorgeschlagen. Erfindungsgemäß ist vorgesehen, dass im Normalbetrieb des hydraulischen Lenksystems ein von der Notlenkpumpe geförderter Volumenstrom dem von der Hauptlenkpumpe geförderten Volumenstrom als Teilvolumenstrom entnommen ist. Hierdurch stellt sich der Effekt ein, dass an der Notlenkpumpe, die sowohl im Normalbetrieb als auch im Notbetrieb läuft, im Normalbetrieb an der Saugseite respektive Pumpeneingang der Notlenkpumpe immer der von der Hauptlenkpumpe bereitgestellte Druck anliegt, so dass keine volumenstrombedingten, durch die Notlenkpumpe erzeugten Verluste im Hydraulikkreis auftreten.

Insbesondere ist die Notlenkpumpe als Konstantpumpe ausgeführt.

Gemäß einer bevorzugten Weiterbildung ist der fahrgeschwindigkeitsabhängig fördernden Notlenkpumpe eine Ventilanordnung zugeordnet, durch welche die Notlenkpumpe mit dem Hydraulikreis verbunden ist, wobei durch die Ventilanordnung fahrtrichtungsabhängig der auf der Druckseite der Hauptlenkpumpe dem Hydraulikkreis entnommene Teilvolumenstrom im Normalbetrieb des Lenksystems in den Hydraulikkreis zurückgeführt wird.

Insbesondere wird die Hauptlenkpumpe in Abhängigkeit von der Drehzahl eines Antriebsmotors der landwirtschaftlichen Arbeitsmaschine betrieben.

Zur Entnahme des Teilvolumenstroms im Normalbetrieb des Lenksystems kann die Ventilanordnung zwei Rückschlagventilpaare aufweisen, wobei durch ein erstes Rückschlagventil des jeweiligen Rückschlagventilpaares fahrtrichtungsabhängig der Teilvolumenstrom auf der jeweiligen sich fahrtrichtungsabhängig einstellenden Saugseite der Notlenkpumpe zugeführt und durch ein zweites Rückschlagventil auf der Druckseite respektive dem Pumpenausgang der Notlenkpumpe in den Hydraulikkreis des Lenksystems zurückgeführt wird. Hierzu sind die ersten Rückschlagventile der beiden Rückschlagventilpaare durch eine gemeinsame Hydraulikleitung mit der Druckseite des Hydraulikkreises verbunden. Die Entnahme des Hydrauliköls erfolgt im Normalbetrieb somit stets mit dem von der Hauptlenkpumpe erzeugten Hydraulikdruck.

Des Weiteren ist es vorteilhaft, wenn die ersten Rückschlagventile des jeweiligen Rückschlagventilpaars der Ventilanordnung von den zweiten Rückschlagventilen abweichende, insbesondere höhere, Öffnungsdrücke aufweisen. Durch die Anordnung der verschiedenen ersten und zweiten Rückschlagventile des jeweiligen Rückschlagventilpaars mit unterschiedlichen Öffnungsdrücken können die Priorität und das Ansaugverhalten der Notlenkpumpe gesteuert werden.

Gemäß einer Weiterbildung kann in dem Hydraulikkreis ein Entnahmepunkt und ein Einspeisepunkt vorgesehen sein, an denen im Normalbetrieb der Teilvolumenstrom durch die Notlenkpumpe entnommen bzw. zurückgeführt wird, zwischen denen ein Rückschlagventil angeordnet ist, wobei der Entnahmepunkt, das Rückschlagventil und der Einspeisepunkt der Hauptlenkpumpe nachgeordnet angeordnet sind. Der in dem Hydraulikkreis vorgesehene Entnahmepunkt und Einspeisepunkt, zwischen denen das Rückschlagventil angeordnet ist, befindet sich stets auf der Druckseite der Hauptlenkpumpe.

Weiterhin kann in einer das Rückschlagventil mit dem Lenkaggregat verbindenden Zuleitung ein Druckbegrenzungsventil nachgeordnet angeordnet sein. Das Druckbegrenzungsventil kann dazu dienen, im Einspeisepunkt durch die Notlenkpumpe zurückgeführtes Hydrauliköl bei einer Überschreitung eines einstellbaren Maximaldrucks im Hydraulikkreis zum Tank abzuführen. Dies kann dem Schutz der Hauptlenkpumpe und der Notlenkpumpe als auch der weiteren hydraulischen Komponenten dienen, die im Hydraulikkreis des Lenksystems zum Betreiben des Lenkaggregates vorgesehen sind.

Insbesondere können der Notlenkpumpe zwei Rückschlagventile zugeordnet sein, wobei das eine Rückschlagventil in einer Leitung zwischen einem Tank und der Notlenkpumpe und das andere Rückschlagventil in einer Zweigleitung, welche von der Leitung zwischen dem Tank und dem ersten Rückschlagventil abzweigt und in einer die Notlenkpumpe und die Ventilanordnung verbindenden Zuleitung einmündet, angeordnet ist. Mittels der beiden Rückschlagventile der Notlenkpumpe zugeordneten Rückschlagventile wird bei einer Fahrtrichtungsumkehr sichergestellt, dass die Entnahme des Teilvolumenstroms nur durch das erste Rückschlagventil des jeweiligen Rückschlagventilpaares der Ventilanordnung erfolgt, welches mit der sich fahrtrichtungsabhängig einstellenden Saugseite der Notlenkpumpe verbunden ist.

Dabei ist vorgesehen, dass die beiden der Notlenkpumpe zugeordneten Rückschlagventile in Richtung Tank sperren.

Im Notbetrieb kann die Notlenkpumpe fahrtrichtungsabhängig über eines der beiden der Notlenkpumpe zugeordneten Rückschlagventile Hydrauliköl aus dem Tank ansaugen. Bei einer Vorwärtsfahrt bleiben die Druckseite respektive der Pumpenausgang der Notlenkpumpe im Normalbetrieb und im Notlenkbetrieb gleich. Bei einem Wechsel vom Normalbetrieb in den Notbetrieb während der Vorwärtsfahrt ändert sich das Druckniveau auf der Saugseite als Pumpeneingang auf Saugdruckniveau. Bei einem Wechsel vom Normalbetrieb in den Notbetrieb während der Rückwärtsfahrt wechseln die Druckseite und die Saugseite der Notlenkpumpe.

Somit kann die Notlenkpumpe das Hydrauliköl in die Zuleitung hinter dem Rückschlagventil des Hydraulikkreises fahrtrichtungsabhängig über eines der beiden zweiten Rückschlagventile der Ventilanordnung zuführen. Dabei kann, fahrtrichtungsabhängig, das von der Notlenkpumpe bereitgestellte Hydrauliköl durch das zweite Rückschlagventil des jeweiligen Rückschlagventilpaars der Ventilanordnung im Einspeisepunkt hinter dem Rückschlagventil eingespeist werden, um den Betrieb des Lenkaggregates im Notbetrieb aufrechtzuerhalten.

Weiterhin wird die eingangs gestellte Aufgabe durch ein Verfahren mit den Merkmalen des nebengeordneten Anspruches 11 gelöst.

Gemäß dem nebengeordneten Anspruch 11 wird ein Verfahren zum Betreiben eines Lenksystems, insbesondere nach einem der Ansprüche 1 bis 10, für eine landwirtschaftliche Arbeitsmaschine mit einem Lenkaggregat, welches mit einem Hydraulikkreis des Lenksystems verbunden ist, und das im Normalbetrieb durch eine Hauptlenkpumpe des Hydraulikreises sowie im Normalbetrieb und im Notbetrieb durch eine Notlenkpumpe des Hydraulikkreises mit Hydrauliköl versorgt wird, vorgeschlagen, wobei im Normalbetrieb des hydraulischen Lenksystems ein von der Notlenkpumpe geförderter Volumenstrom dem von der Hauptlenkpumpe geförderten Volumenstrom als Teilvolumenstrom entnommen wird. Auf alle Ausführung zum erfindungsgemäßen Lenksystem darf verwiesen werden.

So kann der fahrgeschwindigkeitsabhängig fördernden Notlenkpumpe eine zwei Rückschlagventilpaare aufweisende Ventilanordnung zugeordnet sein, welche die Notlenkpumpe mit dem Hydraulikreis verbindet, wobei durch die Ventilanordnung fahrtrichtungsabhängig der dem Hydraulikkreis entnommene Teilvolumenstrom im Normalbetrieb zurückgeführt wird, wobei durch ein erstes Rückschlagventil des jeweiligen Rückschlagventilpaares fahrtrichtungsabhängig der entnommene Teilvolumenstrom auf der jeweiligen sich fahrtrichtungsabhängig einstellenden Saugseite der Notlenkpumpe zugeführt und durch ein zweites Rückschlagventil auf der sich fahrtrichtungsabhängig einstellenden Druckseite der Notlenkpumpe in den Hydraulikkreis zurückgeführt wird.

Nach einer weiteren Lehre gemäß Anspruch 13, welcher eine eigenständige Bedeutung zukommt, wird eine landwirtschaftliche Arbeitsmaschine, insbesondere ein Traktor, mit einem hydraulischen Lenksystem beansprucht, wobei das Lenksystem der Arbeitsmaschine nach einem der Ansprüche 1 bis 10 ausgebildet und zur Durchführung des Verfahrens nach Anspruch 11 oder 12 eingerichtet ist.

Die vorliegende Erfindung wird nachstehend anhand eines in den Zeichnungen dargestellten Ausführungsbeispieles näher erläutert.

Es zeigen:
- Fig. 1: schematisch und exemplarisch eine landwirtschaftliche Arbeitsmaschine mit einem hydraulischen Lenksystem in Seitenansicht; und
- Fig. 2: einen vereinfachten Schaltplan des hydraulischen Lenksystems.

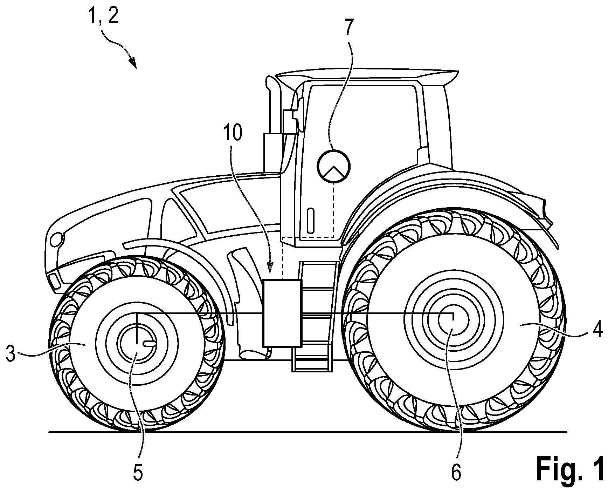

In Fig. 1 ist schematisch und exemplarisch eine landwirtschaftliche Arbeitsmaschine 1 mit einem hydraulischen Lenksystem 10 in Seitenansicht dargestellt. Die landwirtschaftliche Arbeitsmaschine 1 ist insbesondere als ein Traktor 2 ausgeführt. Die Arbeitsmaschine 1 weist vier Bodeneingriffsmittel 3, 4 auf, die jeweils paarweise an einer vorderen Achse 5 und einer hinteren Achse 6 der Arbeitsmaschine 1 angeordnet sind. Beispielsweise bilden die als Räder ausgeführten Bodeneingriffsmittel 3 ein Räderpaar der in Vorwärtsfahrtrichtung gesehen vorderen Achse 5 und die als Räder ausgeführten Bodeneingriffsmittel 4 ein Räderpaar der in Fahrtrichtung gesehen hinteren Achse 6. Zur Betätigung der Bodeneingriffsmittel 3 kann ein doppelt wirkender erster Lenkzylinder und zur Betätigung der Bodeneingriffsmittel 4 ein doppelt wirkender zweiter Lenkzylinder an der jeweiligen Achse 5, 6 vorgesehen sein. Die in der Fig. 1 nicht dargestellten Lenkzylinder werden durch das hydraulisches Lenksystem 10 angesteuert. Das von einem Bediener der landwirtschaftlichen Arbeitsmaschine 1 betätigbare Lenkrad 7 ist in an sich bekannter Weise mit einem Lenkaggregat 12, einem sogenannten Orbitrol gekoppelt, welches die Auslenkung des Lenkrades 7 in eine Steuerung der Durchflussmengen eines Hydrauliköls durch einen Hydraulikkreislauf 11 des Lenksystems 10 bewirkt.

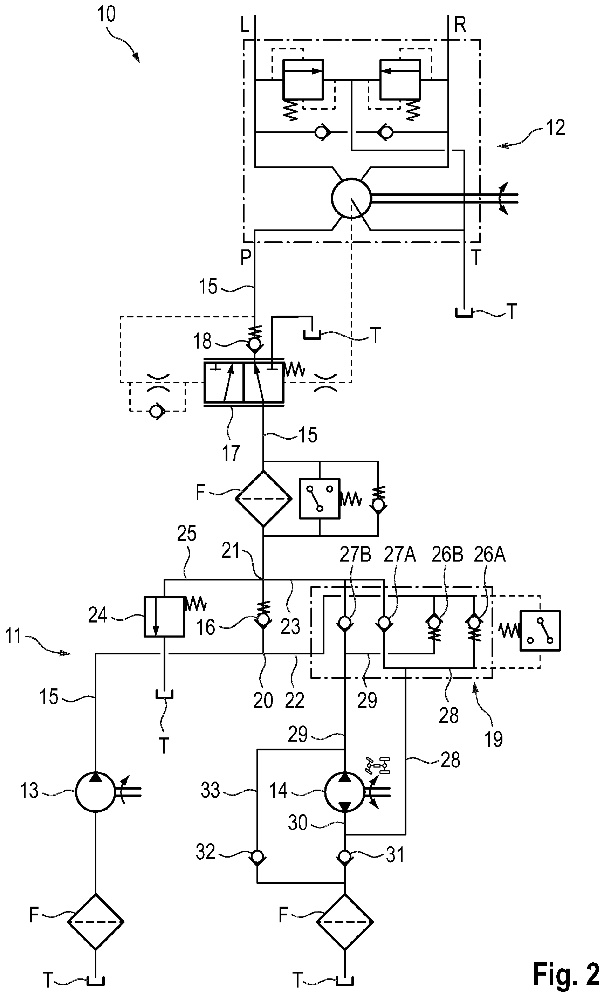

In Fig. 2 ist ein vereinfachter Schaltplan des hydraulischen Lenksystems 10 dargestellt. Das Lenksystem 10 umfasst das in dem Hydraulikkreis 11 angeordnete hydraulische Lenkaggregat 12. Im Normalbetrieb des Lenksystems 10 dient eine Hauptlenkpumpe 13 der Versorgung des Hydraulikkreises 11 respektive des Lenkaggregates 12 des Lenksystems 10. Weiterhin ist eine im Normalbetrieb und im Notbetrieb der Versorgung des Lenkaggregates 12 dienende Notlenkpumpe 14 Teil des Hydraulikkreises 11. Der Notlenkpumpe 14 kommt die Aufgabe zu, bei einem Ausfall der Hauptlenkpumpe 13 die Lenkfähigkeit der landwirtschaftlichen Arbeitsmaschine 1 sicherzustellen.

Die Hauptlenkpumpe 13 wird in Abhängigkeit von der Drehzahl eines Antriebsmotors der landwirtschaftlichen Arbeitsmaschine 1 betrieben. Hingegen wird die Notlenkpumpe 14, die bevorzugt als Konstantpumpe ausgeführt sein kann, fahrgeschwindigkeitsabhängig betrieben.

Die Hauptlenkpumpe 13 saugt Hydrauliköl aus einem gemeinsamen Tank T durch einen der Hauptlenkpumpe 13 vorgeschalteten Filter F an. Durch eine Förderleitung 15 gelangt das Hydrauliköl über ein Rückschlagventil 16 zu einem weiteren Filter F in der Förderleitung 15. Das Rückschlagventil 16 sperrt in Richtung der Hauptlenkpumpe 13. Dem Lenkaggregat 12 ist ein Prioritätsventil 17 vorgeschaltet. Das Prioritätsventil 17 leitet den Hydraulikölstrom über ein weiteres Rückschlagventil 18 dem Lenkaggregat 12 zu, wenn das Hydrauliköl zur Ausführung von Lenkmanövern dort gebraucht wird. Wird mehr Volumenstrom von der Hauptlenkpumpe 13 abgegeben als von dem Lenkaggregat 12 benötigt wird, so leitet das Prioritätsventil 17 den Überschussvolumenstrom in den Tank T zurück. Der Überschussvolumenstrom kann aber auch anderen Verbrauchern der landwirtschaftlichen Arbeitsmaschine 1 zugeführt werden.

Die Notlenkpumpe 14 kann im Notbetrieb durch das Hydrauliköl im Tank T gespeist werden. Hierzu kann die Notlenkpumpe 14 durch einen vorgeschalteten Filter F das Hydrauliköl aus dem Tank T ansaugen.

Im Normalbetrieb des hydraulischen Lenksystems 10 ist ein von der Notlenkpumpe 14 im Fahrbetrieb geförderter Volumenstrom dem von der Hauptlenkpumpe 13 geförderten Volumenstrom als Teilvolumenstrom in einem Entnahmepunkt 20 entnommen. Hierzu ist der fahrgeschwindigkeitsabhängig fördernden Notlenkpumpe 14 eine Ventilanordnung 19 zugeordnet, durch welche die Notlenkpumpe 14 mit dem Hydraulikreis 11 verbunden ist. Durch die Ventilanordnung 19 wird fahrtrichtungsabhängig der dem Hydraulikkreis 11 entnommene Teilvolumenstrom im Normalbetrieb diesem in einem Einspeisepunkt 21 wieder zugeführt. Zwischen dem Entnahmepunkt 20 und dem Einspeisepunkt 21 ist das Rückschlagventil 16 angeordnet, welches ein Zurückströmen zur Ventilanordnung 19 verhindert. Eine Entnahmeleitung 22 verbindet den Entnahmepunkt 20 mit der Ventilanordnung 19. Eine Einspeiseleitung 23 verbindet die Ventilanordnung 19 mit dem Einspeisepunkt 21. Im Einspeisepunkt 21 ist ein Druckbegrenzungsventil 24 über eine Zuleitung 25 angeschlossen.

Das Druckbegrenzungsventil 24 kann dazu dienen, im Einspeisepunkt 21 durch die Notlenkpumpe 14 zurückgeführtes Hydrauliköl bei einer Überschreitung eines einstellbaren Maximaldrucks im Hydraulikkreis 11 zum Tank T abzuführen. Dies dient dem Schutz der Hauptlenkpumpe 13 und der Notlenkpumpe 14 sowie aller weiteren hydraulischen Komponenten, die im Hydraulikkreis 11 des Lenksystems 10 zum Betreiben des Lenkaggregates 12 vorgesehen sind.

Die Ventilanordnung 19 weist zwei Rückschlagventilpaare auf, die baugleich ausgeführt sind. Ein Rückschlagventilpaar ist durch ein erstes Rückschlagventil 26A und ein zweites Rückschlagventil 27A und ein weiteres Rückschlagventilpaar ist durch ein erstes Rückschlagventil 26B und ein zweites Rückschlagventil 27B gebildet. Durch das erste Rückschlagventil 26A, 26B des jeweiligen Rückschlagventilpaares der Ventilanordnung 19 wird der im Entnahmepunkt 20 entnommene Teilvolumenstrom fahrtrichtungsabhängig auf der jeweiligen sich fahrtrichtungsabhängig einstellenden Saugseite der Notlenkpumpe 14 zugeführt und durch das korrespondierende zweite Rückschlagventil 27A, 27B auf der Druckseite der Notlenkpumpe 14 in den Hydraulikkreis 11 des Lenksystems 10 zurückgeführt. Das erste Rückschlagventil 26A und das zweite Rückschlagventil 27A des einen Rückschlagventilpaares bzw. das erste Rückschlagventil 26B und das zweite Rückschlagventil 27B des anderen Rückschlagventilpaares sind miteinander durch Zuleitungen 28 bzw. 29 voneinander unabhängig verbunden. Die beiden ersten Rückschlagventile 26A, 26B eines jeden Rückschlagventilpaars sperren in Richtung des Entnahmepunktes 20, während die beiden zweiten Rückschlagventile 27A, 27B eines jeden Rückschlagventilpaars in Richtung des Einspeisepunktes 21 öffnen. Bevorzugt weisen die ersten Rückschlagventile 26A, 26B des jeweiligen Rückschlagventilpaars der Ventilanordnung 19 von den zweiten Rückschlagventilen 27A, 27B abweichende, insbesondere höhere, Öffnungsdrücke auf.

Im Normalbetrieb gelangt der Teilvolumenstrom vom Entnahmepunkt 20 durch die Entnahmeleitung 22 zu den ersten Rückschlagventilen 26A, 26B. Bei Vorwärtsfahrt der Arbeitsmaschine 1 gelangt der Teilvolumenstrom über das Rückschlagventil 26A durch die Zuleitung 28, welche in eine Leitung 30 zwischen dem Filter F und der Notlenkpumpe 14 einmündet, zur sich bei Vorwärtsfahrt einstellenden Saugseite respektive Pumpeneingang der Notlenkpumpe 14.

Der Notlenkpumpe 14 sind zwei Rückschlagventile 31, 32 zugeordnet. Das eine Rückschlagventil 31 ist in der Leitung 30 zwischen dem Tank T und der Notlenkpumpe 14 und das andere Rückschlagventil 32 ist in einer Zweigleitung 33, welche von der Leitung 30 zwischen dem Tank T und dem Rückschlagventil 31 abzweigt und in der die Notlenkpumpe 14 und die Ventilanordnung 19 verbindenden Zuleitung 29 einmündet, angeordnet. Beide der der Notlenkpumpe 14 zugeordnete Rückschlagventil 31, 32 sperren in Richtung Tank T.

Die Notlenkpumpe 14 fördert den Teilvolumenstrom auf der sich bei Vorwärtsfahrt einstellenden Druckseite respektive dem Pumpenausgang der Notlenkpumpe 14 durch die Zuleitung 29 zum Rückschlagventil 27A dieses Rückschlagventilpaares der Ventilanordnung 19. Über das Rückschlagventil 27A gelangt der Teilvolumenstrom zum Einspeisepunkt 21 und damit zurück in den Hydraulikkreis 10. Die Entnahme und die Rückführung des Teilvolumenstroms durch die Notlenkpumpe 14 erfolgen im Normalbetrieb stets auf der Druckseite der Hauptlenkpumpe 13. Das Hydrauliköl wird also beim Anfahren der Arbeitsmaschine 1 von der Notlenkpumpe 14 im Entnahmepunkt 20 vor dem Rückschlagventil 16 entnommen und nach dem Rückschlagventil 16 im Einspeisepunkt 21 zurückgeführt. Dadurch entsteht kein Verlust im Volumenstrom zum Lenkaggregat 12.

Bei einer Rückwärtsfahrt der Arbeitsmaschine 1 gelangt der Teilvolumenstrom vom Rückschlagventil 26B durch die Zuleitung 29 zur sich bei Rückwärtsfahrt einstellenden Saugseite der Notlenkpumpe 14. Die Notlenkpumpe 14 fördert das Hydrauliköl über die Zuleitung 28 zurück zum Rückschlagventil 27B dieses Rückschlagventilpaares der Ventilanordnung 19. Über das Rückschlagventil 27B gelangt der Teilvolumenstrom zum Einspeisepunkt 21 und damit zurück in den Hydraulikkreis 10. Entsprechend wird auch bei Rückwärtsfahrt das Hydrauliköl beim Anfahren der Arbeitsmaschine 1 von der Notlenkpumpe 14 vor dem Rückschlagventil 16 entnommen und nach dem Rückschlagventil 16 zurückgegeben, wodurch kein Verlust im Volumenstrom zum Lenkaggregat 12 entsteht.

Die beiden der Notlenkpumpe 14 zugeordneten Rückschlagventile 31 und 32 verhindern das Überströmen des Teilvolumenstroms im Normalbetrieb unabhängig von der Fahrtrichtung.

Im Notbetrieb, d.h. bei einem Ausfall der Hauptlenkpumpe 13, fördert diese kein Hydrauliköl zum Lenkaggregat 12, womit auch die Versorgung der Notlenkpumpe 14 über eines der beiden Rückschlagventilpaare der Ventilanordnung 19 unterbrochen ist. Dadurch beginnt die Notlenkpumpe 14 bei Vorwärtsfahrt über das Rückschlagventil 31 Hydrauliköl selbsttätig aus dem Tank T zu saugen und fördert einen fahrgeschwindigkeitsabhängigen Volumenstrom zum Lenkaggregat 12. Die Förderung erfolgt dabei über die gleichen Komponenten des Hydraulikkreises 11 wie durch die Hauptlenkpumpe 13 im Normalbetrieb.

Das bei Vorwärtsfahrt im Notbetrieb durch das Rückschlagventil 31 angesaugte Hydrauliköl wird von der Notlenkpumpe 14 durch die Zuleitung 29 über das Rückschlagventil 27A der Ventilanordnung 19 in den Hydraulikreis 11 im Einspeisepunkt 21 eingespeist. Bei Rückwärtsfahrt im Notbetrieb wird über das Rückschlagventil 32 Hydrauliköl selbsttätig aus dem Tank T angesaugt und durch die Zuleitung 28 über das Rückschlagventil 27B der Ventilanordnung 19 im Einspeisepunkt 21 in den Hydraulikreis 11 eingespeist.

**Bezugszeichenliste**

| | | | |
|---|---|---|---|
| 1 | Arbeitsmaschine | 33 | Zweigleitung |
| 2 | Traktor | | |
| 3 | Bodeneingriffsmittel | F | Filter |
| 4 | Bodeneingriffsmittel | T | Tank |
| 5 | Vordere Achse | | |
| 6 | Hintere Achse | | |
| 7 | Lenkrad | | |
| 10 | Lenksystem | | |
| 11 | Hydraulikkreis | | |
| 12 | Lenkaggregat | | |
| 13 | Hauptlenkpumpe | | |
| 14 | Notlenkpumpe | | |
| 15 | Förderleitung | | |
| 16 | Rückschlagventil | | |
| 17 | Prioritätsventil | | |
| 18 | Rückschlagventil | | |
| 19 | Ventilanordnung | | |
| 20 | Entnahmepunkt | | |
| 21 | Einspeisepunkt | | |
| 22 | Entnahmeleitung | | |
| 23 | Einspeiseleitung | | |
| 24 | Druckbegrenzungsventil | | |
| 25 | Zuleitung | | |
| 26A | Erstes Rückschlagventil | | |
| 26B | Erstes Rückschlagventil | | |
| 27A | Zweites Rückschlagventil | | |
| 27B | Zweites Rückschlagventil | | |
| 28 | Zuleitung | | |
| 29 | Zuleitung | | |
| 30 | Leitung | | |
| 31 | Rückschlagventil | | |
| 32 | Rückschlagventil | | |

## Patentansprüche

1. Hydraulisches Lenksystem (10) für eine landwirtschaftliche Arbeitsmaschine (1, 2), mit einem Lenkaggregat (12), das mit einem Hydraulikkreis (11) des Lenksystems (10) verbunden ist, einer im Normalbetrieb der Versorgung des Hydraulikkreises (11) dienenden Hauptlenkpumpe (13) sowie einer im Normalbetrieb und im Notbetrieb der Versorgung des Hydraulikkreis (11) dienenden Notlenkpumpe (14), **dadurch gekennzeichnet, dass** im Normalbetrieb des hydraulischen Lenksystems (10) ein von der Notlenkpumpe (14) geförderter Volumenstrom dem von der Hauptlenkpumpe (13) geförderten Volumenstrom als Teilvolumenstrom entnommen ist.

2. Hydraulisches Lenksystem (10) nach Anspruch 1, **dadurch gekennzeichnet, dass** der fahrgeschwindigkeitsabhängig fördernden Notlenkpumpe (14) eine Ventilanordnung (19) zugeordnet ist, durch welche die Notlenkpumpe (14) mit dem Hydraulikreis (11) verbunden ist, wobei durch die Ventilanordnung (19) fahrtrichtungsabhängig der auf der Druckseite der Hauptlenkpumpe (13) dem Hydraulikkreis (11) entnommene Teilvolumenstrom im Normalbetrieb in diesen zurückgeführt wird.

3. Hydraulisches Lenksystem (10) nach Anspruch 2, **dadurch gekennzeichnet, dass** die Ventilanordnung (19) zwei Rückschlagventilpaare aufweist, wobei durch ein erstes Rückschlagventil (26A, 26B) des jeweiligen Rückschlagventilpaares der Ventilanordnung (19) fahrtrichtungsabhängig der Teilvolumenstrom auf der jeweiligen sich fahrtrichtungsabhängig einstellenden Saugseite der Notlenkpumpe (14) zugeführt und durch ein zweites Rückschlagventil (27A, 27B) auf der Druckseite der Notlenkpumpe (14) in den Hydraulikkreis (11) des Lenksystems (10) zurückgeführt wird.

4. Hydraulisches Lenksystem (10) nach Anspruch 3, **dadurch gekennzeichnet, dass** die ersten Rückschlagventile (26A, 26B) des jeweiligen Rückschlagventilpaars der Ventilanordnung (19) von den zweiten Rückschlagventilen (27A, 27B) abweichende, insbesondere höhere, Öffnungsdrücke aufweisen.

5. Hydraulisches Lenksystem (10) nach einem der vorangehenden Ansprüche, **dadurch gekennzeichnet, dass** in dem Hydraulikkreis (11) ein Entnahmepunkt (20) und ein Einspeisepunkt (21) vorgesehen sind, an denen im Normalbetrieb der Teilvolumenstrom durch die Notlenkpumpe (14) entnommen bzw. zurückgeführt wird, zwischen denen ein Rückschlagventil (16) angeordnet ist, wobei der Entnahmepunkt (20), das Rückschlagventil (16) und der Einspeisepunkt (21) der Hauptlenkpumpe (13) nachgeordnet angeordnet sind.

6. Hydraulisches Lenksystem (10) nach Anspruch 5, **dadurch gekennzeichnet, dass** in einer das Rückschlagventil (16) mit dem Lenkaggregat (12) verbindenden Zuleitung (15) ein Druckbegrenzungsventil (24) nachgeordnet ist.

7. Hydraulisches Lenksystem (10) nach einem der vorangehenden Ansprüche, **dadurch gekennzeichnet, dass** der Notlenkpumpe (14) zwei Rückschlagventile (31, 32) zugeordnet sind, wobei das eine Rückschlagventil (31) in einer Leitung (30) zwischen einem Tank (T) und der Notlenkpumpe (14) und das andere Rückschlagventil (32) in einer Zweigleitung (33), welche von der Leitung (30) zwischen dem Tank (T) und dem ersten Rückschlagventil (31) abzweigt und in einer die Notlenkpumpe (14) und die Ventilanordnung (19) verbindenden Zuleitung (29) einmündet, angeordnet ist.

8. Hydraulisches Lenksystem (10) nach Anspruch 7, **dadurch gekennzeichnet, dass** die beiden der Notlenkpumpe (14) zugeordneten Rückschlagventile (31, 32) in Richtung Tank (T) sperren.

9. Hydraulisches Lenksystem (10) nach Anspruch 7 oder 8, **dadurch gekennzeichnet, dass** im Notbetrieb die Notlenkpumpe (14) fahrtrichtungsabhängig über eines der beiden der Notlenkpumpe (14) zugeordneten Rückschlagventile (31, 32) Hydrauliköl aus dem Tank (T) ansaugt.

10. Hydraulisches Lenksystem (10) nach Anspruch 7 bis 9, **dadurch gekennzeichnet, dass** die Notlenkpumpe (14) das Hydrauliköl in die Zuleitung (15) hinter dem Rückschlagventil (16) fahrtrichtungsabhängig über eines der beiden zweiten Rückschlagventile (27A, 27B) der Ventilanordnung (19) zuführt.

11. Verfahren zum Betreiben eines hydraulischen Lenksystems (10) für eine landwirtschaftliche Arbeitsmaschine (1, 2), mit einem Lenkaggregat (12), welches mit einem Hydraulikkreis (11) des Lenksystems (10) verbunden ist, und das im Normalbetrieb durch eine Hauptlenkpumpe (13) des Hydraulikreises (11) sowie im Normalbetrieb und im Notbetrieb durch eine Notlenkpumpe (14) mit Hydrauliköl versorgt wird, **dadurch gekennzeichnet, dass** im Normalbetrieb des hydraulischen Lenksystems (10) ein von der Notlenkpumpe (14) geförderter Volumenstrom dem von der Hauptlenkpumpe (13) geförderten Volumenstrom als Teilvolumenstrom entnommen wird.

12. Verfahren nach Anspruch 11, **dadurch gekennzeichnet, dass** der fahrgeschwindigkeitsabhängig fördernden Notlenkpumpe (14) eine zwei Rückschlagventilpaare aufweisende Ventilanordnung (19) zugeordnet ist, welche die Notlenkpumpe (14) mit dem Hydraulikreis (11) verbindet, wobei durch die Ventilanordnung (19) fahrtrichtungsabhängig der dem Hydraulikkreis (11) entnommene Teilvolumenstrom im Normalbetrieb zurückgeführt wird, wobei durch ein erstes Rückschlagventil (26A, 26B) des jeweiligen Rückschlagventilpaares fahrtrichtungsabhängig der entnommene Teilvolumenstrom auf der jeweiligen sich fahrtrichtungsabhängig einstellenden Saugseite der Notlenkpumpe (14) zugeführt und durch ein zweites Rückschlagventil (27A, 27B) auf der Druckseite der Notlenkpumpe (14) in den Hydraulikkreis (11) zurückgeführt wird.

13. Landwirtschaftliche Arbeitsmaschine (1), insbesondere Traktor (2), mit einem hydraulischen Lenksystem (10), **dadurch gekennzeichnet, dass** das Lenksystem (10) nach einem der Ansprüche 1 bis 10 ausgebildet und zur Durchführung des Verfahrens nach Anspruch 11 oder 12 eingerichtet ist.

## Claims

1. A hydraulic steering system (10) for an agricultural working machine (1, 2), with a steering assembly (12) which is connected to a hydraulic circuit (11) of the steering system (10), with a main steering pump (13) which serves to supply the hydraulic circuit (11) in normal operation as well as with an emergency steering pump (14) which serves to supply the hydraulic circuit (11) in normal operation and in emergency operation, **characterized in that** in the normal operation of the hydraulic steering system (10), a volumetric flow delivered by the emergency steering pump (14) is withdrawn from the volumetric flow delivered by the main steering pump (13) as a partial volumetric flow.

2. The hydraulic steering system (10) according to claim 1, **characterized in that** the emergency steering pump (14), delivering in a manner which is dependent on drive speed, is associated with a valve assembly (19) through which the emergency steering pump (14) is connected to the hydraulic circuit, wherein in normal operation, the partial volumetric flow withdrawn from the hydraulic circuit (11) on the delivery side of the main steering pump (13) is returned thereto through the valve assembly (19) in a manner which is dependent on travel direction.

3. The hydraulic steering system (10) according to claim 2, **characterized in that** the valve assembly (19) has two non-return valve pairs, wherein the partial volumetric flow is supplied, in a manner which is dependent on travel direction, to the respective intake side of the emergency steering pump (14), set in a manner which is dependent on travel direction, through a first non-return valve (26A, 26B) of the respective non-return valve pair of the valve assembly (19) and is returned to the hydraulic circuit (11) of the steering system (10) through a second non-return valve (27A, 27B) on the delivery side of the emergency steering pump (14).

4. The hydraulic steering system (10) according to claim 3, **characterized in that** the first non-return valves (26A, 26B) of the respective non-return valve pair of the valve assembly (19) have opening pressures which are different from the second non-return valves (27A, 27B), in particular higher.

5. The hydraulic steering system (10) according to one of the preceding claims, **characterized in that** a withdrawal point (20) and an injection point (21) are provided in the hydraulic circuit (11) at which, in normal operation, the partial volumetric flow is withdrawn or returned through the emergency steering pump (14), between which a non-return valve (16) is disposed, wherein the withdrawal point (20), the non-return valve (16) and the injection point (21) are disposed downstream of the main steering pump (13).

6. The hydraulic steering system (10) according to claim 5, **characterized in that** a pressure limiting valve (24) is disposed downstream in a supply line (15) connecting the non-return valve (16) to the steering assembly (12).

7. The hydraulic steering system (10) according to one of the preceding claims, **characterized in that** two non-return valves (31, 32) are associated with the emergency steering pump (14), wherein one non-return valve (31) is disposed in a line (30) between a tank (T) and the emergency steering pump (14) and the other non-return valve (32) is disposed in a branch line (33) which branches off the line (30) between the tank (T) and the first non-return valve (31) and discharges into a supply line (29) connecting the emergency steering pump (14) and the valve assembly (19).

8. The hydraulic steering system (10) according to claim 7, **characterized in that** the two non-return valves (31, 32) associated with the emergency steering pump (14) block in the direction of the tank (T).

9. The hydraulic steering system (10) according to claim 7 or claim 8, **characterized in that** in emergency operation, the emergency steering pump (14) draws hydraulic oil out of the tank (T) travel direction-dependently via one of the two non-return valves (31, 32) associated with the emergency steering pump (14).

10. The hydraulic steering system (10) according to claims 7 to 9, **characterized in that** the emergency steering pump (14) delivers the hydraulic oil into the supply line (15) behind the non-return valve (16) travel direction-dependently via one of the two second non-return valves (27A, 27B) of the valve assembly (19).

11. A method for operating a hydraulic steering system (10) for an agricultural working machine (1, 2), with a steering assembly (12) which is connected to a hydraulic circuit (11) of the steering system (10), and which in normal operation is supplied with hydraulic oil through a main steering pump (13) of the hydraulic circuit (11) and which in normal operation and in emergency operation is supplied through an emergency steering pump (14), **characterized in that** in normal operation of the hydraulic steering system (10), a volumetric flow delivered by the emergency steering pump (14) is withdrawn from the volumetric flow delivered by the main steering pump (13) as a partial volumetric flow.

12. The method according to claim 11, **characterized in that** a valve assembly (19) having two non-return valve pairs and which connects the emergency steering pump (14) to the hydraulic circuit (11) is associated with the emergency steering pump (14) which delivers in a manner which is dependent on drive speed, wherein in normal operation, the partial volumetric flow withdrawn from the hydraulic circuit (11) is returned through the valve assembly (19) in a manner which is dependent on travel direction, wherein the withdrawn partial volumetric flow is supplied, in a manner which is dependent on travel direction, to the respective intake side of the emergency steering pump (14), set in a manner which is dependent on travel direction, through a first non-return valve (26A, 26B) of the respective non-return valve pair and is returned to the hydraulic circuit (11) through a second non-return valve (27A, 27B) on the delivery side of the emergency steering pump (14).

13. An agricultural working machine (1), in particular a tractor (2), with a hydraulic steering system (10), **characterized in that** the steering system (10) is constructed in accordance with one of claims 1 to 10 and is configured to carry out the method in accordance with claim 11 or claim 12.

## Revendications

1. Système de direction (10) hydraulique pour une machine de travail agricole (1, 2), comprenant un groupe de direction (12) qui est relié à un circuit hydraulique (11) du système de direction (10), une pompe de direction principale (13) qui sert à l'alimentation du circuit hydraulique (11) en service normal, ainsi qu'une pompe de direction de secours (14) qui sert à l'alimentation du circuit hydraulique (11) en service normal et en service de secours, **caractérisé en ce que**, en service normal du système de direction (10) hydraulique, un flux volumique transporté par la pompe de direction de secours (14) est prélevé en tant que flux volumique partiel dans le flux volumique transporté par la pompe de direction principale (13).

2. Système de direction (10) hydraulique selon la revendication 1, **caractérisé en ce qu'**est associé à la pompe de direction de secours (14) dont le refoulement est fonction de la vitesse de déplacement, un dispositif de clapets (19) par l'intermédiaire duquel la pompe de direction de secours (14) est reliée au circuit hydraulique (11), sachant qu'en service normal, le flux volumique partiel prélevé dans le circuit hydraulique (11), côté refoulement de la pompe de direction principale (13), est réintroduit dans le circuit hydraulique par le dispositif de clapets (19), en fonction du sens de déplacement.

3. Système de direction (10) hydraulique selon la revendication 2, **caractérisé en ce que** le dispositif de clapets (19) présente deux paires de clapets de non-retour, sachant que le flux volumique partiel est amené sur le côté aspiration de la pompe de direction de secours (14) se réglant en fonction du sens de déplacement, par un premier clapet de non-retour (26A, 26B) de la paire de clapets de non-retour respective du dispositif de clapets (19), en fonction du sens de déplacement, et est renvoyé dans le circuit hydraulique (11) du système de direction (10), sur le côté refoulement de la pompe de direction de secours (14), par un deuxième clapet de non-retour (27A, 27B).

4. Système de direction (10) hydraulique selon la revendication 3, **caractérisé en ce que** les premiers clapets de non-retour (26A, 26B) de la paire de clapets de non-retour respective du dispositif de clapets (19) présentent des pressions d'huile différentes, notamment plus élevées, par rapport aux deuxièmes clapets de non-retour (27A, 28B).

5. Système de direction (10) hydraulique selon une des revendications précédentes, **caractérisé en ce que** dans le circuit hydraulique (11), il est prévu un point de prélèvement (20) et un point d'injection (21) sur lesquels, en service normal, le flux volumique partiel est respectivement prélevé ou renvoyé par la pompe de direction de secours (14), et entre lesquels est disposé un clapet de non-retour (16), sachant que le point de prélèvement (20), le clapet de non-retour (16) et le point d'injection (21) de la pompe de direction principale (13) sont disposés en aval.

6. Système de direction (10) hydraulique selon la revendication 5, **caractérisé en ce qu'**une soupape de limitation de pression (24) est disposée en aval dans une conduite d'amenée (15) reliant le clapet de non-retour (16) au groupe de direction (12).

7. Système de direction (10) hydraulique selon une des revendications précédentes, **caractérisé en ce que** deux clapets de non-retour (31, 32) sont associés à la pompe de direction de secours (14), l'un des clapets de non-retour (31) étant disposé dans une conduite (30) entre un réservoir (T) et la pompe de direction de secours (14), et l'autre clapet de non-retour (32) dans une conduite de dérivation (33) qui part de la conduite (30) entre le réservoir (T) et le premier clapet de non-retour (31) et débouche dans une conduite d'amenée (29) reliant la pompe de direction de secours (14) et le dispositif de clapets (19).

8. Système de direction (10) hydraulique selon la revendication 7, **caractérisé en ce que** les deux clapets de non-retour (31, 32) associés à la pompe de direction de secours (14) bloquent en direction du réservoir (T).

9. Système de direction (10) hydraulique selon la revendication 7 ou 8, **caractérisé en ce que**, en service de secours, la pompe de direction de secours (14) aspire de l'huile hydraulique depuis le réservoir (T) par l'intermédiaire de l'un des deux clapets de non-retour (31, 32) associés à la pompe de direction de secours (14), en fonction du sens de déplacement.

10. Système de direction (10) hydraulique selon les revendications 7 à 9, **caractérisé en ce que** la pompe de direction de secours (14) injecte l'huile hydraulique dans la conduite d'amenée (15), en aval du clapet de non-retour (16), par l'intermédiaire de l'un des deux deuxièmes clapets de non-retour (27A, 27B) du dispositif de clapets (19), en fonction du sens de déplacement.

11. Procédé pour faire fonctionner un système de direction (10) hydraulique destiné à une machine de travail agricole (1, 2), comprenant un groupe de direction (12) qui est relié à un circuit hydraulique (11) du système de direction (10) et qui, en service normal, est alimenté en huile hydraulique par une pompe de direction principale (13) du circuit hydraulique (11) et, en service de secours, par une pompe de direction de secours (14),
**caractérisé en ce que**, en service normal du système de direction (10) hydraulique, un flux volumique transporté par la pompe de direction de secours (14) est prélevé en tant que flux volumique partiel dans le flux volumique transporté par la pompe de direction principale (13).

12. Procédé selon la revendication 11, **caractérisé en ce qu'**est associé à la pompe de direction de secours (14) dont le refoulement est fonction de la vitesse de déplacement, un dispositif de clapets (19) qui présente deux paires de clapets de non-retour et relie la pompe de direction de secours (14) au circuit hydraulique (11), sachant qu'en service normal, le flux volumique partiel prélevé dans le circuit hydraulique (11) est renvoyé par le dispositif de clapets (19) en fonction du sens de déplacement, le flux volumique partiel prélevé étant amené, en fonction du sens de déplacement, par un premier clapet de non-retour (26A, 26B) de la paire de clapets de non-retour respective, sur le côté aspiration respectif de la pompe de direction de secours (14) qui se règle en fonction du sens de déplacement, et est renvoyé dans le circuit hydraulique (11) par un deuxième clapet de non-retour (27A, 27B), sur le côté refoulement de la pompe de direction de secours (14).

13. Machine de travail agricole (1), notamment tracteur (2), dotée d'un système de direction (10) hydraulique, **caractérisée en ce que** le système de direction (10) est réalisé conformément à l'une des revendications 1 à 10 et est agencé aux fins de mise en œuvre du procédé selon la revendication 11 ou 12.
